(19) Europäisches Patentamt / European Patent Office / Office européen des brevets

(11) **EP 3 066 194 B1**

(12) **EUROPEAN PATENT SPECIFICATION**

(45) Date of publication and mention
of the grant of the patent:
**07.08.2019  Bulletin 2019/32**

(21) Application number: **14802752.7**

(22) Date of filing: **05.11.2014**

(51) Int Cl.:
*C12N 5/078* (2010.01)    *G01N 1/30* (2006.01)
*G01N 1/36* (2006.01)

(86) International application number:
**PCT/US2014/064162**

(87) International publication number:
**WO 2015/069791 (14.05.2015 Gazette 2015/19)**

(54) **METHOD FOR PREPARING FFPE QUALITY CONTROL MATERIAL WITH BULKING AGENT**

VERFAHREN ZUR HERSTELLUNG EINES FFPE-QUALITÄTSKONTROLLMATERIALS MIT FÜLLSTOFF

MÉTHODE DE PRÉPARATION D'UN MATÉRIAU DE CONTRÔLE QUALITÉ FFPE COMPRENANT UN AGENT GONFLANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.11.2013   US 201361900266 P**

(43) Date of publication of application:
**14.09.2016   Bulletin 2016/37**

(73) Proprietor: **Life Technologies Corporation**
**Carlsbad, CA 92008 (US)**

(72) Inventors:
• **LAU, Aron**
  **Carlsbad, California 92008 (US)**
• **SHAHBAZIAN, Mona**
  **Carlsbad, California 92008 (US)**
• **SCHOENBRUNNER, Erhard**
  **Moraga, California 94556 (US)**

(74) Representative: **V.O.**
**P.O. Box 87930**
**Carnegieplein 5**
**2508 DH Den Haag (NL)**

(56) References cited:
**WO-A1-2012/022557     US-A1- 2012 088 233**

• KATIE L PITTS ET AL: "High speed versus pulsed images for micro-particle image velocimetry: a direct comparison of red blood cells versus fluorescing tracers as tracking particles", PHYSIOLOGICAL MEASUREMENT, INSTITUTE OF PHYSICS PUBLISHING, BRISTOL, GB, vol. 34, no. 10, 18 September 2013 (2013-09-18), pages 1363-1374, XP020251552, ISSN: 0967-3334, DOI: 10.1088/0967-3334/34/10/1363 [retrieved on 2013-09-18]
• J. J. Rome ET AL: "Anatomic barriers influence the distribution of in vivo gene transfer into the arterial wall. Modeling with microscopic tracer particles and verification with a recombinant adenoviral vector", ARTERIOSCLEROSIS, THROMBOSIS, AND VASCULAR BIOLOGY., vol. 14, no. 1, 1 January 1994 (1994-01-01), pages 148-161, XP55438478, US ISSN: 1079-5642, DOI: 10.1161/01.ATV.14.1.148

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**BACKGROUND**

Routine processing of tissue samples in the clinical setting involves formalin fixation and paraffin embedding. FFPE is a highly efficient method that is currently the standard in pathology laboratories. Formalin-fixed, paraffin-embedded (FFPE) tissues may be stored indefinitely at room temperature, and nucleic acids (both DNA and RNA) may be recovered from them decades after fixation, making FFPE tissues an important resource for molecular assays. WO2012/022557 discloses reference samples for quality control, whereby the reference samples comprise a mixture of cells in FFPE, but no nucleus free cells. However, better methods for developing FFPE materials that mimic patient specimens are needed to monitor the performance of molecular assays from FFPE materials and to develop appropriate quality control materials for these assays.

**SUMMARY**

This disclosure relates to reagents and methods for preparing formalin-fixed, paraffin-embedded (FFPE) samples by combining test cells with control cells not comprising a nucleus having a physical differentiating feature from the test cells to provide a test mixture and preparing a FFPE sample therefrom. In certain embodiments, the control cell improves the visibility and / or uniformity of the test cells in the sample as compared to a sample prepared in the absence of the bulking agent, determined visually (e.g., able to be seen by the naked eye and differentiated from the test cells). The physical differentiating feature may be, for instance, color which may, in some instances, be provided by a detectable label (e.g., fixably attached to the control cells). In certain embodiments, the control cells do not comprise a nucleus, DNA (e.g., nuclear DNA), and / or RNA (e.g., microRNA (miRNA), messenger RNA (mRNA)). Typically, the test cells comprise a genetic marker not detectable and / or not present in the control cells. In some embodiments, the control cells and / or may be and / or may comprise red blood cells (RBCs). In some embodiments, this disclosure relates to formalin-fixed embedded quality control material for use in validation, verification, and as run controls for molecular assays. The quality control material can be used for a variety of tissues and for a variety of molecular assays. The quality control material can be used in commercial labs for validation or verification, including limit-of-detection analyses, precision analyses, and accuracy analyses. These and other features of the present teachings will become more apparent from the description herein.

**BRIEF DESCRIPTION OF THE DRAWINGS**

The skilled artisan will understand that the drawings, described below, are for illustration purposes only. The drawings are not intended to limit the scope of the present teachings in any way.

FIG. 1A shows an FFPE block manufactured with and without red blood cells. FIG. 1B shows an FFPE block manufactured with red blood cells for processing DNA or RNA.

FIG. 2 show FFPE sections in SafeClear during deparaffinization.

**DETAILED DESCRIPTION**

This disclosure relates to reagents and methods for preparing formalin-fixed, paraffin-embedded (FFPE) samples by combining test cells with control cells not comprising a nucleus having a physical differentiating feature from the test cells to provide a test mixture and preparing a FFPE sample therefrom. Some embodiments described herein provide highly reproducible FFPE methods that provide for detection of one or more markers as described below. For example, the use of the methods described herein with nucleic acid-based assays may allow for more efficient (e.g., simpler process, less time) isolation of nucleic acid (e.g., DNA, RNA) from the FFPE with an amount of degradation in the sample that mimics the in the assay. In this manner, a more accurate control is provided to the assay. In some embodiments, the samples prepared as described herein may serve as quality control material that may be used to validate, verify and / or provide controls for nucleic acid-based assays. Such quality control material may be used for a variety of tissues and in a variety of assay systems (e.g., including but not limited to limit-of-detection analyses, precision analyses, and accuracy analyses). The methods described herein provide highly reproducible FFPE methods that provide for detection of one or more markers. Further, these methods allow for a quality control FFPE product that includes test cells containing at least one test marker in a background of control cells that comprises at least one physical differentiating feature from the test cells (e.g., red blood cells (RBCs). Laboratories performing FFPE-based molecular diagnostic tests typically use synthetic oligonucleotides, cell lines, genomic or plasmid DNA, or patient specimens as quality control material.

However synthetic material, cell lines, and genomic or plasmid DNA may not control for specific steps in the process. Patient specimens are often limited in quantity and inconsistent between sections, reducing the utility of the control material for monitoring trending over an extended period of time. A FFPE quality control material that mimics FFPE tissue and is homogenous and consistently produced lot-to-lot ensures that laboratories have access to a full process control that can be used over an indefinite period to monitor assay performance. The methods are highly reproducible within a lot and from lot-to-lot and provide for detection of one or more markers as described herein.

In certain embodiments, the control cells may improve the visibility and / or uniformity of the test cells in the sample as compared to a sample prepared in the absence of the control cells. The "visibility" of a sample may be determined by any method available to those of ordinary skill in the art including, for example, visual inspection to identify and / or count cells within the sample and / or a particular area thereof. Visibility typically refers to able to be seen by the naked eye and differentiated from the test cells. Thus, visibility may be determined with respect to the number and / or type of cells and / or control cells present within a particular area of the sample determined, for instance, visually, such that one type of cell and / or control cell may be differentiated from another type (e.g., from test cells). "Uniformity" may be similarly determined with an emphasis on whether the test cells and / or control cells are, for instance, sufficiently and / or substantially evenly spaced (e.g., distanced) from one another within the sample and/or if the cells in the FFPE section retain the shape expected from the mold (e.g., without noticeable distortion, other than shrinkage in size). A uniform sample may be one in which the test cells and / or control cells are not present in "clumps" (e.g., areas of high cell and / or control cell concentration) and / or where areas of the sample are devoid of test cells and / or control cells. These determinations may be accomplished manually (e.g., using a microscope) or with the aid of an automated device to determine the number of cells present in each FFPE section.

In certain embodiments, the control cells have one or more "physical differentiating features" from the test cells. A suitable physical differentiating feature may be, for instance, color, size and / or another detectable "marker". The physical differentiating feature may be, for instance, a difference in color that may, in some instances, be provided by the color (e.g., de novo) of the control cell (e.g., encased colored control cell such as an RBC) and / or a detectable label (e.g., fixably attached to the control cells). Thus, the control cell may comprise a colored substance. The colored substance could include dyes, pigments, or proteins. Examples include, but are not limited to hemoglobin, melanins (e.g., eumelanin or pheomelanin), bilirubin, biliverdin, carotene, chlorophyll, anthocyanins, or carotenoids. In some embodiments, the control cells may be of substantially different or substantially the same size as the test cells (e.g., another physical differentiating feature). In some embodiments, the test cells comprise one or more markers not detectable and / or not present in the control cells. The control cells may also contain and / or lack a "genetic" marker (e.g., a "target sequence" such as a nucleic acid (DNA, RNA) and / or expressed protein) that is absent and / or present, respectively, in the test cells. A genetic marker may be "present" by either existing or being expressed within and / or by the control cell (e.g., the genome, cytoplasm, or surface of a cell). Such a marker may be naturally present within the control cell or the control cell may be manufactured to include the same. A control cell) may also be modified such that a naturally present marker is removed therefrom (e.g., by deletion of a DNA sequence from the genome of the cells). For instance, in certain embodiments, the control cells may or may not comprise any or any particular type of DNA (e.g., nuclear DNA), and / or any particular type of RNA (e.g., microRNA (miRNA), messenger RNA (mRNA)) while the test cells conversely do or do not, respectively, comprise such components. Thus, for example, the control cell) may lack a DNA sequence that is present in the test cells. In some embodiments, for instance, the control cells are mammalian cells that express a physical differentiating feature from the test cells. Exemplary control cells include but are not limited to red blood cells, non-human cells such as bacterial, yeast, plant, or animal cells that have a color and / or do not contain the marker of interest. For instance, the control cells may be and / or comprise red blood cells (RBCs) where the test cells are mammalian cells (e.g., as described in the Examples section). In such embodiments, the physical differentiating feature may be color (e.g., where, unlike the RBCs the test cells are not red in color). Other suitable control cells are also contemplated for use in these methods, as could be determined by one of ordinary skill in the art.

In certain embodiments, the methods described herein may be used to solve problems associated with the preparation of FFPE material. For instance, to generate formalin fixed and paraffin embedded quality control material, typically a synthetic tissue is created. Such synthetic tissue typically includes the steps of obtaining a defined concentration of cellular material; mixing the cellular material with a gelling polymer to create a gel/cellular material; adding the gel/cellular material to a mold (e.g., a polypropylene cylinder) with a defined shape until the gelling polymer solidifies; and, slicing the solidified material to a uniform and defined size. In some embodiments, the methods also include formalin fixing the sliced solidified material. In some embodiments, the methods also include embedding the material in paraffin. In some embodiments, the cellular material includes test cells and one or more control cells. In some embodiments, the cellular material comprises a known number of test cells and one or more control cells (e.g., a known amount) in a homogeneous mixture. In some embodiments, the test cells may comprise at least one marker to be detected that is not present in the control cells (e.g., one or more DNA and / or RNA sequences).

The sample (e.g., cell material) may comprise both test cells and control cells not comprising a nucleus in known amounts of one or both of the test cells (e.g, optionally including background and / or control cells) and the control cells. In some embodiments, the mixture of test cells and control cells consists of about $10^{-12}$ to about 100,000% control cells (e.g., in some embodiments, the lower limit may be about one control cell per $10^{10}$ test cells and the upper limit may be about one thousand control cells per test cell). In some embodiments, the mixture to be fixed may comprise about $10^{-12}$ to about 100,000% test cells (e.g., $10^{-12}$, $10^{-n}$, $10^{-10}$, $10^{-9}$, $10^{-8}$, $10^{-7}$, $10^{-6}$, $10^{-5}$, $10^{-4}$, .001, 0.005, 0.006, 0.008, 0.009, 0.01, 0.02, 0.03, 0.04, 0.05, 0.06, 0.07, 0.08, 0.09, 0.1, 0.2, 0.3, 0.4, 0.5, 0.6, 0.7, 0.8, 0.9, 1, 2, 3, 4, 5, 6, 7, 8, 9, 10, 11, 12, 13, 14, 15, 16, 17, 18, 19, 20, 21 , 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71 , 72, 73, 74, 75, 76, 77, 78, 79, 80, 81, 82, 83, 84, 85, 86, 87, 88, 89, 90, 91, 92, 93, 94, 95, 96, 97, 98, 99, 100 (e.g., which equals a 1 : 1 ratio of test cells to the control cells (e.g., RBCs)), 200, 300, 400, 500, 600, 700, 800, 900, 1000, 2500, 5000, 10,000, 20,000, 30,000, 40,000, 50,000, 60,000, 70,000, 80,000, 90,000 or 100,000% test cells (e.g., relative to the control cells (e.g., cells such as RBCs)). In some embodiments, the amount of the test cells in the mixture is less than the amount of the control cells in the mixture.

Typically, a defined concentration of test cells is admixed with a defined concentration of control cells, admixed with a gelling polymer, and formalin-fixed. This process also typically involves dehydration, clearing and infiltration steps. During any of these steps, the synthetic tissue may shrink in size or become otherwise deformed, resulting in a sample that is difficult to further process. For example, the shrinkage of a synthetic tissue with a low cell concentration (e.g., approximately $1 \times 10^7$ cells/mL or less including but not limited to any of approximately $10^6$, $10^5$, $10^4$, $10^3$, $10^2$ or 10 cells/ml) may not be uniform as the tissue may not retain its original shape. This problem may be solved using the methods described herein. In the examples, a control cell (e.g., RBCs) was added to the cellular material containing the target for the diagnostic assay system and observed to reduce shrinkage and improve uniformity. RBCs were selected because these may be processed similarly to test cells, but do not contain a nucleus and therefore do not contain nuclear DNA. Accordingly, the marker of interest (e.g., target of interest, the KRAS sequence in the Examples) is not present in the RBCs. In this way, the control cell was used to increase the total cell concentration of the sample for processing without diluting the target of interest.

In certain embodiments, the sample may comprise test cells (e.g., a defined concentration of test cells) admixed with the control cells (e.g., a defined concentration of control cells such as RBCs)), where the test cells comprise one or more markers (e.g., color, size, nucleic acid-, protein-, carbohydrate-, and / or lipid-based marker) and the control cell does not comprise the one or more markers. That marker is typically considered a differentiating feature or, more specifically, a physical differentiating feature. In some embodiments, the test cells may be cancer cells. In some embodiments, the test cells are a mixture of cancer cells and non-cancer cells. In some embodiments, the test cells are non-cancer cells. For instance, the test cells may be derived from a biopsy. Thus, the sample may comprise, for instance, cells having and / or expressing a genetic marker (e.g., a target sequence) of cancer such as a SNP (single nucleotide polymorphism), insertion, deletion, translocation, fusion, CNV (copy number variation) etc, and cells lacking and / or not expressing that genetic marker (e.g., a cell line containing the wild-type allele). The cell mixtures may be mixed with a suitable excipient (e.g., agarose) and control cells (e.g., RBCs) and aliquoted into a suitable mold (e.g., a polypropylene cylindrical mold). The cell-excipient mixture may then be allowed to solidify (e.g., in the form of a cylinder), the resultant product removed therefrom, and placed on a sterile surface. A slicing apparatus may then be used to slice the cylinder into equal parts. Each part may then be formalin fixed and embedded according to standard procedures (e.g., as in the Examples herein). Lastly, a microtome may be used to slice the FFPE blocks into sections of defined thickness that may be placed into vials or onto microscope slides. The resulting FFPE slice can be referred to as the quality control (QC) sample. In some embodiments, each of the above-described steps may or may not be distinct steps (e.g., one or more steps may be combined), may or may not include additional steps not listed, and / or may also comprise less than all of these steps.

Commonly, FFPE specimens require processing steps prior to analysis. These steps can include, without limitation: deparaffinization, reversal of cross linking, extraction, nucleic acid yield test, and amplification/detection. These may be accomplished using any suitable techniques, which are well known to those of ordinary skill in the art.

In some embodiments, the genetic marker may relate to any one or more of the cells lines, mutations and / or genes listed in Tables 1 and 2. These are non-limiting examples of genetic markers. One of skill in the art will appreciate that any genetic marker can be incorporated into the compositions and methods disclosed herein.

**Table 1**

| Cell lines and KRAS mutations | |
| :---: | :---: |
| **Name** | **Cell Line** |
| KRASG12A | SW1116 |
| KRAS G12C | SW1463 |

(continued)

| Cell lines and KRAS mutations ||
| Name | Cell Line |
| --- | --- |
| KRAS G12D | PANC-1 |
| KRAS G12R | PSN-1 |
| KRAS G12S | A549 |
| KRAS G12V | SW480 |
| KRAS G13D | DLD-1 |
| Wildtype | Jurkat cells |

**Table 2**

| Exemplary Markers ||||
| --- | --- | --- | --- |
| ABL1 | DNMT3A | IL7R | PARP2 |
| AKT 1 | DOT1L | INHBA | PAX5 |
| AKT2 | EGFR | IRF4 | PBRM1 |
| AKT3 | EMSY (C11orf30) | IRS2 | PDGFRA |
| ALK | EP300 | JAK1 | PDGFRB |
| APC | EPHA3 | JAK2 | PDK1 |
| AR | EPHA5 | JAK3 | PIK3CA |
| ARAF | EPHB1 | JUN | PIK3CG |
| ARHGAP5 | ERBB2 | KAT6A (MYST3) | PIK3R1 |
| ARFRP1 | ERBB3 | KDM5A | PIK3R2 |
| ARID 1A | ERBB4 | KDM5C | PPP2R1A |
| ARID2 | ERCC1 | KDM6A | PRDM1 |
| ASXL1 | ERG | KDR | PRKAR1A |
| ATM | ESR1 | KEAP1 | PRKDC |
| ATR | EZH2 | KIT | PTCH1 |
| ATRX | FAM123B (WTX) | KLHL6 | PTEN |
| AURKA | FAM46C | KRAS | PTPN11 |
| AURKB | FANCA | LRPIB | RAD50 |
| AXL | FANCC | MAGOH | RAD51 |
| BAP1 | FANCD2 | MAP2K1 | RAF1 |
| BARD1 | FANCE | MAP2K2 | RARA |
| BCL2 | FANCF | MAP2K4 | RBI |
| BCL2L2 | FANCG | MAP3K1 | RET |
| BCL6 | FANCL | MAPK1 | RHEB |
| BCOR | FBXW7 | MAX | RHOA |
| BCORL1 | FGF10 | MCL1 | RICTOR |
| BLM | FGF14 | MDM2 | RNF43 |

(continued)

| Exemplary Markers | | | |
|---|---|---|---|
| BRAF | FGF19 | MDM4 | RPTOR |
| BRCA1 | FGF23 | MED12 | RUNX 1 |
| BRCA2 | FGF3 | MEF2B | SETD2 |
| BRIP1 | FGF4 | MEN1 | SF3B 1 |
| BTK | FGF6 | MET | SMAD2 |
| CARD11 | FGFR1 | MGMT | SMAD4 |
| CBFB | FGFR2 | MITF | SMARCA4 |
| CBL | FGFR3 | MLH1 | SMARCB1 |
| CCND1 | FGFR4 | MLL | SMO |
| CCND2 | FLT1 | MLL2 | SOCS1 |
| CCND3 | FLT3 | MPL | SOX 10 |
| CCNE1 | FLT4 | MRE11A | SOX2 |
| CD79A | FOXL2 | MSH2 | SPEN |
| CD79B | GABRA6 | MSH6 | SPOP |
| CDC73 | GABRG2 | MTOR | SRC |
| CDH1 | GATA1 | MUTYH | STAG2 |
| CDK12 | GATA2 | MYC | STAT3 |
| CDK4 | GATA3 | MYCL1 | STAT4 |
| CDK6 | GID4 (C17orf39) | MYCN | STK11 |
| CDK8 | GNA11 | MYD88 | SUFU |
| CDKN1B | GNA13 | NBN | TET2 |
| CDKN2A | GNAQ | NF1 | TGFBR2 |
| CDKN2B | GNAS | NF2 | TNFAIP3 |
| CDKN2C | GPR124 | NFE2L2 | TNFRSF14 |
| CEBPA | GRIN2A | NFKBIA | TOP1 |
| CHEK1 | GSK3B | NKX2-1 | TP53 |
| CHEK2 | HGF | NOTCH1 | TSC1 |
| CIC | HNF1A | NOTCH2 | TSC2 |
| CREBBP | HRAS | NPM1 | TSHR |
| CRKL | IDH1 | NRAS | U2AF1 |
| CRLF2 | IDH2 | NTRK1 | VHL |
| CSF1R | IFITM 1 | NTRK2 | WISP3 |
| CTCF | IFITM3 | NTRK3 | WT1 |
| CTNNA1 | IGF1R | NUP93 | XPOI |
| CTNNB1 | IKBKE | PAK3 | ZNF217 |
| DAXX | IKZF1 | PALB2 | ZNF703 |
| DDR2 | IL3RA | PARP1 | BRAF-1799'rA |
| CTNNB1-121AG | CTNNB1-134CT | EGFR-2369CT | KRAS-34GA |

(continued)

| Exemplary Markers | | | |
|---|---|---|---|
| KRAS-35GA | KRAS-38GA | KRAS-176CG | KRAS-183AC |
| NRAS-35GA | NRAS-38GA | NRAS-181CA | NRAS-183AT |
| TP53-524GA | TP53-637CT | TP53-72ITG | TP53-733GA |
| TP53-742CT | TP53-743GA | TP53-817CT | - |

Additionally suitable markers may include, for instance, allele- specific and / or cell type-specific biomarkers. For example, common solid tumors such as breast, lung, prostate, colorectal, thyroid and pancreatic tissues are of predominantly epithelial cell origins. Several biomarkers for tumor cells of epithelial origins may include, for instance, one or more of cytokeratin, EPCAM, ICAM, etc., or cancer related markers, including CEA (carcinoembryonic antigen). Similarly, prostate cancer cells usually express prostate-specific antigen (PSA). Allelic variants may include, by way of non-limiting example, BRAF-1799TA, CTNNB 1-121 AG, CTNNB1-134CT, EGFR-2369CT, EGFR-2573TG, KRAS-34GA, KRAS-35GA, KRAS-38GA, KRAS-176CG, KRAS-183AC, NRAS-35GA, NRAS-38GA, NRAS-181CA, NRAS-183 AT, TP53-524GA, TP53-637CT, TP53-721TG, TP53-733GA, TP53-742CT, TP53-743GA, TP53-817CT, and the like as described in, for example, US 2010/0221717 A1 (U.S. Ser. No. 12/641,321) and US 2010/0285478 A1 (U.S. Ser. No. 12/748,329). As used herein, the term "allele" refers generally to alternative DNA sequences at the same physical locus on a segment of DNA, such as, for example, on homologous chromosomes. An allele can refer to DNA sequences which differ between the same physical locus found on homologous chromosomes within a single cell or organism or which differ at the same physical locus in multiple cells or organisms ("allelic variant"). In some instances, an allele can correspond to a single nucleotide difference at a particular physical locus. In other embodiments and allele can correspond to nucleotide (single or multiple) insertion or deletion. These markers are normally not found or expressed (or expressed in much lower level) in normal circulating blood cells (e.g., the exemplary control cells RBCs).

Any one or more of these cells lines and / or markers may be used alone and / or in combination with one another. Multiplex molecular assays allow for the detection of multiple test cells. Therefore, further embodiments include the step of pooling samples to be tested prior to using the multiplexed assays described herein. For example, different slices with individual mutations can be placed together in 1 tube (to be processed together). For example and without limitation, 1 slice from the G12V and 1 slice from the G12D mutations could be placed together to make a multiplex control (e.g., Table 7). Other markers may also be suitable as would be understood by those of ordinary skill in the art and any number of markers can be combined to produce a multiplex control. For instance, the marker may be any marker known in the art and can be used to perform cancer research, diagnose disease, prognosticate disease and/or to test disease for drug effectiveness.

The cell material and / or control cells to be processed by the methods described herein may be obtained from any cell, tissue or organ of any type of organism. The cell material may include one or more prokaryotic cells and / or one or more eukaryotic cells including but not limited to a protozoa, fungus, plant, animal (e.g., human). The cells may be, for instance, hematopoietic cells. The cells may be cancer cells and / or infected cells. The cells may be tissue culture cells. The cells may also be obtained from a biopsy. In some embodiments, a tissue sample is disrupted into cells to prepare a homogeneous material for FFPE processing.

In some embodiments, the cell material contains test cells. The test cells may be cells that contain and / or express and / or are considered "positive" for one or more particular marker or markers that are not present in the control cells. In some embodiments, the cell material may contain more than one type of test cell. For example, if two different markers are diagnostic for a particular disease, two different test cells may be included, with one test cell being positive for one marker and the other test cell being positive for a second marker. In some embodiments, the sample may also contain a control cell. In some embodiments, the cell material can contain background cells (e.g., cells that do not contain the marker and/or contains a wild-type marker instead). The background cells may make up between, for example, about 1 to about 99.9% (e.g., about any of 1, 5, 10, 15, 20, 25, 30, 35, 40, 45, 50, 55, 60, 65, 70, 75, 80, 85, 90, 95, 97.5, 99, 99.5 or 99.9%) of the cells in the sample. The background cells may be fixed or unfixed along with or when added to the test cell and / or control cell mixture. In at least one embodiment, the test cells and control cells may be mixed and then fixed to form a mixture for processing. In certain embodiments, the test cells may be fixed and then mixed with the one or more control cells for preparation of FFPE blocks. In some embodiments, the test cells may be fixed and the control cell may be fixed or unfixed in the mixture. In some embodiments, the test cell and control cell can be mixed before fixation. In some embodiments, the test cell and the control cell can be mixed after the cells are fixed. In some embodiments, the cell material is a formalin fixed (or other fixed) sample and/or an FFPE sample of tissue. In this case, because it would be difficult or impossible to disrupt the FFPE tissue into separate cells, the cell material can be used for a positive or negative control. In embodiments where the cells are unfixed, they may be frozen. In certain embodiments, cells can be mixed with polymer, solidified and then frozen. When this technique is used, an agent, such as glycerol may be added to the polymer to prevent cracking.

In certain embodiments, the control cell can be synthetic. Any suitable synthethic control cell can be used. Nonlimiting examples include: 3000 Series NANOSPERE size standards, 4000 Series Monosized particles, 3K/4K Series Particle Counter Standards, 4D Seried Dry Microsphere Size Standards, and 8000 Series Silica Particle Size Standards (Thermo Fisher Scientific).

The excipient or excipients used to create the solidified mixture of test cells and control cells may comprise a gel (e.g., any colloidal suspension of a solid dispersed in a liquid). A suitable excipient may be any gel that may be mixed with test cells without changing the properties of the test cells such that the parameter being tested (e.g., the presence and / or expression and / or character of a particular nucleic acid, protein, carbohydrate and / or lipid) cannot be, or is at least less efficiently or more difficult to assay. A suitable gel, for example, may be any gel that can change from a liquid or semi-solid state (suitable for mixing with test cells) to a solid or gelled state (e.g., such that it may be sliced). In some embodiments, the gel may be an agarose, agar, carageenan, pectin, egg yolk, any type of polymer, and / or mixtures thereof. In some embodiments, the gel is a polymer that may be solidified or hardened (e.g., using a cross-linking agent, motion and / or temperature).

Solidified or hardened refers to the ability of a gel to be converted from a liquid or semi-liquid state to a solid or semi-solid state. Temperature- solidified gels (e.g., a polymer is introduced into a tube in a fluid form, then allowed to gel to a solid form by cooling within the tube) may also be suitable. Most suitable of these types of gels are those that do not require an amount of heat to that would be detrimental to the test cells and / or the control cells. In addition, suitable gels may or may not contain inhibitory substances. In some embodiments, the gel does not contain an inhibitory substance that may inhibit the fixation, embedding, or downstream molecular tests. However, in other embodiments, a pre-defined concentration of inhibitor could be added such as typically found in a human specimen. For example, heme molecules from red blood cells can inhibit PCR. A gel containing heme molecules therefore could serve as a control for extraction step efficiency in an assay if the concentration therein in comparable to a normal human sample. Other excipients are also contemplated as would be understood by those of ordinary skill in the art.

The mold can be any shape known to the skilled artisan that allow for slicing. In some embodiments, the shape of the mold can be a cylinder. The cylinder can be of any length and diameter such that a useful sized slice is produced. The cylinder can be made of any material that will keep its shape when a hot gel is poured into it. In some embodiments, the material will not stick to the gel/cellular material mixture. In some embodiments, the material will not affect the cellular integrity. In some embodiments, the material can be removed from the solidified gel/cellular material mixture. In some embodiments, the material can be removed without sticking to the gel/cellular material mixture. In some embodiments, the ends of the cylindrical material can be cut off and the tube of hardened gel/cellular material can be slid out. Materials may include, for instance, polypropylene and equivalent plastic materials. Other materials can be envisioned that might require producing a mold that can be opened and closed, for example glass, metals, and very hard plastics. The cylindrical solidified gel/cellular material can then be sliced into sections of a uniform and defined size. This ensures that the amount of nucleic acid in each slice will be equivalent. The cylindrical solidified gel/cellular material mixture may be sliced using any method known in the art that results in slices of uniform and defined sizes. In some embodiments, the slicer may be a modified egg slicer, modified so that the base is removed and the tines (e.g., which are equidistant from each other) are more easily usable. Any slicer with equidistant slicing ability could be used. In some embodiments, the slicing wires or blades are spaced 1 mm to 5 mm apart. In some embodiments other methods of providing for equivalent samples (e.g., slices) are used. Any tool can be used that provides a sample with a constant volume. Exemplary methods include using a tool to obtain a plug, or using a syringe to obtain an even amount of liquefied sample (e.g., liquefied gel/cellular material).

Chemical fixatives are used to preserve tissue from degradation, and to maintain the structure of the cell and of sub-cellular components such as cell organelles (e.g., nucleus, endoplasmic reticulum, mitochondria) and may be used in the methods described herein. The most common fixative for FFPE is neutral buffered formalin (4% formaldehyde in phosphate buffered saline). Fixatives preserve tissues or cells mainly by irreversibly cross-linking proteins. The main action of these aldehyde fixatives is to cross-link amino groups in proteins through the formation of $CH_2$ (methylene) linkage, in the case of formaldehyde, or by a $C_5H_{10}$ cross-links in the case of glutaraldehyde. This process, while preserving the structural integrity of the cells and tissue can damage the biological functionality of proteins, particularly enzymes, and can also denature them to a certain extent. This can be detrimental to certain histological techniques. The sliced solidified gel/cellular material may be immersed in a fixative, such as a solution with a protein crosslinking activity, such as but not limited to a formaldehyde solution, glutaraldehyde solution, formaldehyde-alcohol mixed solution, alcohol solution, Bouin's solution, Zenker solution, Hely solution, osmic acid solution, Carnoy solution, standard saline citrate (SSC) and RNAeasy™, and equivalents thereof. In some embodiments, the fixative is formalin. In some embodiments, the formaldehyde can be in any kind of buffer. Non-limiting examples of fixative alcohols include ethanol and isopropanol. These fixatives are commercially available. The time of fixation may be from any of about 0.5 to about 72 hours, including but not limited to about any of 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, and 71 hours. The temperature of fixation can be from about 4°C to about 26°C, including but not limited to, any of about 5, 6, 7, 8, 9, 10, 11, 12, 13, 14, 15, 16, 17, 18, 19, 20, 21, 22, 23, 24, and 25°C. Other conditions for fixation are also contemplated as would be understood by those of ordinary skill in the art.

After the slices have been fixed, an embedding step may be carried out. During this process the tissue samples are placed into molds along with liquid embedding material (such as agar, gelatin, or wax) which is then hardened. This is achieved by cooling in the case of paraffin wax and heating (curing) in the case of the epoxy resins. The acrylic resins are polymerized by heat, ultraviolet light, or chemical catalysts. The hardened blocks containing the tissue samples are then ready to be sectioned. Because formalin-fixed, paraffin-embedded (FFPE) tissues may be stored indefinitely at room temperature, and nucleic acids (both DNA and RNA) may be recovered from them decades after fixation, this makes FFPE tissues an important resource for historical studies in medicine. Embedding can also be accomplished using frozen, non-fixed tissue in a water-based medium. Pre-frozen tissues are placed into molds with the liquid embedding material, usually a water-based glycol, OCT, TBS, Cryogel, or resin, which is then frozen to form hardened blocks. The resulting blocks can be sectioned using methods known in the art, including, but not limited to, microtomes, vibratory microtomes and cryostats and the like.

An exemplary method comprises:
Cell polymer cylinder -> egg slicer -> mini cylinder -> FFPE process -> FFPE blocks - Microtome for sectioning - FFPE sections

Sections may be deparaffinized using methods known in the art and/or commercially available kits. The methods remove the bulk of paraffin from the sample. Various techniques are known for deparaffinizing and include, but are not limited to, washing with an organic solvent or agent to dissolve the paraffin. Solvents may include but are not limited to, benzene, toluene, ethylbenzene, xylenes, D-li-monene, octane, and mixtures thereof. These solvents are preferably of high purity, usually greater than 99%. The volume used and the number of washes necessary will depend on the size of the sample and the amount of paraffin to be removed. A sample may be washed between 1 and about 10 times, or between about two and about four times. A typical volume of organic solvent is about 500 ml for a 10 mm tissue sample. After deparaffinization, samples are preferably wash such as by step-wise washing with aqueous lower alcoholic solutions of decreasing concentrations. Ethanol is a preferred lower alcohol for wash while other alcohols may also be used. Non-limiting examples include methanol, isopropanol, and other C1-C5 alcohols. The sample is alternatively vigorously mixed with alcoholic solutions followed by its removal. In one embodiment, the concentration of alcohol is stepwise lowered.

The sections may be used to isolate DNA or RNA for identification of the presence of a marker and/or for expression of a marker using standard techniques. The markers can be used for investigational purposes, diagnosis, prognosis, typing, and/or staging of disease. As described above, the marker(s) may include DNA or RNA (e.g., for the presence and / or expression levels thereof in test cells). Exemplary markers include, for instance, the genes (or proteins expressed therefrom) listed in Table 2. Gene expression analyses of various tumor types (breast, lung, prostate and colon) have revealed that there exist numerous subtypes of tumors within each anatomically defined cancer. Furthermore, in some of these studies different subtypes have been linked to a particular prognosis. For example, Wigle et al, (2002 Cancer Research 62 (11) pp. 3005-3008) and Beer et al., (2002 Nature 8 (8) pp. 816-824) demonstrated the existence of particular clusters of genes that are correlated with different disease-free survivals in non-small cell lung cancer. These reports establish that the molecular "make-up" of tumors, as defined by gene expression profiles, has a direct correlation to clinical endpoints such as disease free survival. These retrospective studies strongly suggest that in going forward with prospective trials there is great promise that the molecular make-up of a given tumor will also be directly correlated with whether a patient will respond or not respond to a given therapy. Pharmacogenomic methods can identify patients likely to respond to a particular drug and can lead the way to new therapeutic approaches. For example, thymidylate synthase (TS) is an integral enzyme in DNA biosynthesis where it catalyzes the reductive methylation of deoxyuridine monophosphate (dUMP) to deoxythymidine monophosphate (dTMP) and provides the only route for de novo synthesis of pyrimidine nucleotides within the cell (Johnston et al., 2002, J. Clinical Oncology, 20(7) pp. 1721-1728). Thymidylate synthase is a target for chemotherapeutic drugs, most commonly the antifolate agent 5-fluorouracil (5-FU). As the most effective single agent for the treatment of colon, head and neck and breast cancers, the primary action of 5-FU is to inhibit TS activity, resulting in depletion of intracellular thymine levels and subsequently leading to cell death. Other markers that can be tested for include, but are not limited to: HIPI in the diagnosis and treatment of lymphoma and brain cancers; TS and/or ERCC1 expression levels prognosticate the probable resistance of a patient's tumor to treatment with 5-FU and oxaliplatin-based therapies; recurrent gene fusions of androgen regulated genes and ETS family member genes in prostate cancer; ERBB-1, VEGF, cyclin A, FOS, JUN and MYC in patients with squamous cell lung carcinomas. Hematopoietic cancers or metastases may also be tested using the reagents and methods described herein (e.g., QC FFPE controls). Cancers which involve cells generated during hematopoiesis, a process by which cellular elements of blood, such as lymphocytes, leukocytes, platelets, erythrocytes and natural killer cells are generated are referred to as hematopoietic cancers. Lymphocytes which can be found in blood and lymphatic tissue and are critical for immune response are categorized into two main classes of lymphocytes: B lymphocytes (B cells) and T lymphocytes (T cells), which mediate humoral and cell mediated immunity, respectively. Many of these cancers are characterized by recurrent translocations that can be detected from FFPE using methods discussed herein.

Many different types of DNAs and RNAs may be detected using the methods described herein. Exemplary DNA molecules may include, for instance, genomic DNA, mitochondrial DNA, cDNA or other DNA. Exemplary RNAs that may be detected may include, for example, messenger RNA (mRNA), non-coding RNA (including long non-coding RNA), antisense RNA, CRISPR RNA, microRNA, small-interfering RNA (siRNA), pathogen-associated RNAs (e.g., bacterial or viral RNAs), and the like. Such RNA molecules may be detected using any of the available methods of detection including, for example, next generation sequencing (NGS), RT-PCR, microarray-based systems, and the like. In certain embodiments, a combination of cell lines can be detected. In some embodiments, a plurality of cell lines can be utilized in equal or unequal proportion. For example, a plurality (i.e., 2 or more) of cell lines can be combined in equal proportion wherein each contains a different fusion mRNA gene, thereby providing an FFPE fusion control material.

This disclosure further relates to kits comprising one or more reagents for carrying out the methods described herein along with, optionally, instructions for use. A "kit," as used herein, may refer to a combination of at least one QC sample for FFPE prepared using the methods described herein (e.g., a FFPE slice of a gelled homogeneous mixture of test cells and control cells (e.g., RBCs)). Other aspects of this disclosure relates to kits that may be used to prepare samples for FFPE. In some embodiments, at least one quality control sample (e.g., including at least one type of test cell comprising a marker and at least one control cell comprising a physical differentiating feature) for FFPE may be made by the methods described herein and included in a kit. In some embodiments, the kit may also include multiple samples containing different types of test cells.

In some embodiments, the kit may contain a combination of QC samples organized in such a way as to provide controls for all variations of a particular marker. In some embodiments, the variations of the marker are variations of an oncogene that is diagnostic for a particular cancer (e.g., see Tables 1 and 2). In some embodiments, the variations of the marker are variations of a mutation in a gene that are prognostic for the usefulness of treating with a drug. In some embodiments, the kit includes a number of different markers that are diagnostic of a particular cancer. In some embodiments, the marker or markers are for a particular disease. In other embodiments, the marker or markers are for a variety of diseases. In some embodiments, the marker or markers test for drug efficacy for a disease. In some embodiments, the marker or markers test for diagnosis of a disease or a group of related diseases. In some embodiments, the marker or markers test for a series of diseases that have common characteristics and/or symptoms. In some embodiments, for instance, the kit may comprise samples known to cover the breadth of mutations known for a particular cancer. In some embodiments, the marker may have unknown significance but may otherwise be of interest to the user (e.g., for basic research purposes). Other types of kits are also contemplated herein as would be understood by those of ordinary skill in the art.

The kit may also include a container (e.g., vial, test tube, flask, bottle, syringe or other packaging system (e.g., include injection or blow-molded plastic containers) into which a reagent may be placed / contained, and in some embodiments, aliquoted) for containing any one or more reagents of the kit. Where more than one component is included in the kit, it will generally include at least one second, third or other additional container into which the additional components can be separately placed. However, various combinations of components can be packaged in a single container. The kits may also include reagent containers in close confinement for commercial sale. When the components of the kit are provided in one and / or more liquid solutions, the liquid solution comprises an aqueous solution that can be a sterile aqueous solution. A kit can also include instructions for employing the kit components as well as the use of any other reagent not included in the kit. Instructions may include variations that can be implemented. The instructions may be provided as a separate part of the kit (e.g., a paper or plastic insert or attachment) or as an internet-based application. In some embodiments, the kit may contain QC FFPE samples for between any of about 1 to 1000 markers which may be detected alone or in combination with one another (e.g., a multiplex assay). In some embodiments, the kit may also comprise at least one other sample containing a defined concentration of a test cell admixed with the control cells at the concentrations described herein or otherwise found to be suitable. In some embodiments, the kit may include QC FFPE samples of various test cells to control cells ratios as described above. The kit may alternatively or also include, for instance, QC FFPE slices containing control cells and mixtures of wild-type to mutant test cells in concentrations of about 1%, 10%, 20%, 30%, 40%, 50%, 60%, 70%, 80%, 90%, and 100%. Exemplary kits are provided in Examples 3 and 4 herein. Other variations and arrangements for the kits of this disclosure are contemplated as would be understood by those of ordinary skill in the art.

In general, the following definitions may apply to the terms utilized in describing the reagents and methods of this disclosure. For instance, the term "FFPE" or "formalin fixed paraffin embedded" may refer to a method of treating tissues and/or cells by formalin fixing and paraffin embedding the tissues and/or cells and then slicing embedded material typically with a microtome. There are many methods known in the art for FFPE. As used herein, the phrase "quality control" ("QC") typically refer to a system for ensuring the maintenance of proper standards in methods to determine whether the process exhibits nonrandom variation. The terms "marker" and "test marker" may be interchangeable and may refer to a cellular component specific to a particular disease, whether of unknown significance, prognostic, diagnostic, and/or with reference to treatment. The marker may be a DNA, RNA, protein, carbohydrate and / or lipid marker. The marker may relate to any type of mutation associated with a disease. Markers may be associated with but are not limited to, translocations, alleles, single nucleotide polymorphisms (SNPs), expression profiles, etc. Such markers may relate to any type of nucleic acid including but not limited to DNA and / or RNA (mRNA, rRNA, tRNA, mitochondrial RNA). The markers may relate to genes, SNPs, microsatellites, translocations, alleles, mutations (e.g., multiple nucleotide and/or large deletions, additions, or changes), multi-RNA complexes, splice variants, transposons, ribozymes, microRNAs (primary, pre- or mature microRNAs), bacterial genomes, plasmids, viral genomes, and / or viroids. For example, in some embodiments, a DNA-based marker may be used to identify the presence of a SNP. In some embodiments, a RNA-based marker may be used to identify the expression of a SNP.

The terms "gelling polymer" or "gel" are interchangeable and may refer to a colloidal suspension of a solid dispersed in a liquid (e.g., a semi-rigid solid). The term "homogeneous" may refer to a mixture that exhibits uniformity. In the context of the mixture of test cells and control cells, the components may be intermixed in a uniform manner such that each portion (e.g., slice) contains approximately the same concentration of test cells and control cells as substantially any other portions (e.g., slices). As described herein, exemplary test cells may include but are not limited to, cancer cells, cells from a patient, cells from a biopsy, hematopoietic cells, tissue culture cells, and / or cells of a tissue. As used herein, the terms "background cell", "negative cell", and / or "negative control" may be interchangeable and refer to a cell that does not contain the marker that is being tested for. In some cases, such a cell may be a wild-type cell of the same type as the test cell. The term "patient" may refer to any human or animal that is tested and/or treated for disease. The term "mold" may refer to a hollow cavity form or matrix into which a liquid or semi-liquid material is placed to take a desired shape upon cooling or drying. The term "test cell" may refer to a cell that is being tested to determine whether it contains one or more particular markers. The term "cylindrical" refers to something having the shape of a cylinder, an object shaped like a tube, an object or shape (e.g., rectangle, square, triangular cylinder) with straight sides and circular ends of equal size. The terms "solidified" and "hardened" may be used interchangeably and, with respect to a gel, refer to the ability of a gel to go from a liquid or semi-liquid state to a solid or semi-solid state. In the case of temperature-solidified gels, a polymer may be introduced into a cylindrical tube in a fluid form, then allowed to gel to a solid form by cooling. Gels may also be solidified by adding a cross-linker, by motion, and/or by other methods known to those of skill in the art. When using a gel mixed with a cell, it is of interest to choose a gel that does not require extreme heat to form a liquid since this will be detrimental to the cells. The term "fix" may refer to a method of preserving cells or tissue, which may include the irreversible cross-linking of proteins on and / or within cells.

It is to be understood that the descriptions of this disclosure are exemplary and explanatory only and are not intended to limit the scope of the current teachings. In this application, the use of the singular includes the plural unless specifically stated otherwise. Also, the use of "comprise", "contain", and "include", or modifications of those root words, for example but not limited to, "comprises", "contained", and "including", are not intended to be limiting. Use of "or" means "and/or" unless stated otherwise. The term "and/or" means that the terms before and after can be taken together or separately. For illustration purposes, but not as a limitation, "X and/or Y" can mean "X" or "Y" or "X and Y". Whenever a range of values is provided herein, the range is meant to include the starting value and the ending value and any value or value range therebetween unless otherwise specifically stated. For example, "from 0.2 to 0.5" may mean 0.2, 0.3, 0.4, and 0.5; ranges therebetween such as 0.2-0.3, 0.3 - 0.4, 0.2 - 0.4; increments there between such as 0.25, 0.35, 0.225, 0.335, 0.49; increment ranges there between such as 0.26 - 0.39; and the like. The term "about" or "approximately" may refer the ordinary meaning of the term but may also indicate a value or values within about any of 1-10 percent of the listed value.

The section headings used herein are for organizational purposes only and are not to be construed as limiting the subject matter described in any way. While the present teachings are described in conjunction with various embodiments, it is not intended that the present teachings be limited to such embodiments. On the contrary, the present teachings encompass various alternatives, modifications, and equivalents, as will be appreciated by those of skill in the art. Certain embodiments are further described in the following examples. These embodiments are provided as examples only and are not intended to limit the scope of the claims in any way.

## EXAMPLES

Aspects of the present teachings can be further understood in light of the following examples, which should not be construed as limiting the scope of the present teachings in any way. Tables 3-5 provide materials, consumable and instruments used in the following examples. The examples use the KRAS molecular markers to demonstrate the usefulness of the quality control FFPE methods. There are known mutations within the codon 12 and 13 of the KRAS gene that results in the loss of effectiveness of pharmaceutical therapies. Seven mutations (G12D, G12V, G12C, G12S, G12A, G12R, G13D) comprise 98.5% of known KRAS mutations that are involved in identifying the usefulness of chemotherapy on colorectal cancers. A cell line containing the KRAS G12C mutation was obtained and mixed with red blood cells as described in Example 1. The method using an exemplary control cell (RBCs) was compared to the method carried out without a control cell, as described below.

The method including RBCs was found to promote uniformity of the cell-containing polymer (referred to as the synthetic tissue) during the FFPE process. This improves the ease of manufacturing FFPE controls and increases the yield of the number of sections per block due to the increased size. The method including RBCs also improved the ease of extraction because the cell pellet was easier to see in the tube after deparaffinization.

**Table 3**

| Materials | |
|---|---|
| **Reagents** | |
| **Item** | **Description** |
| 10% Neutral Buffered Formalin | Formalin used as the fixative reagent in the process. |
| 70% Alcohol | Reagent used in the dehydration process. |
| 95% Alcohol | Reagent used in the dehydration process. |
| 100% Alcohol | Reagent used in the dehydration process. |
| SafeClear | Xylene substitute, used to remove lipids and aid in the transition from dehydration to paraffin. |
| Paraffin | Paraffin used as the embedding medium. |
| Dulbecco's Modified Eagle Medium (DMEM) | Buffer used to dilute cell mixtures to the appropriate concentration. |
| Low Melting Temperature Agarose | Low melting agarose is used as the copolymer that is mixed with cells and placed into a tube mold. Low melting is used due to the ability of remaining at a liquid state at a lower temperature than standard agarose. The lower temperature reduces the likelihood of lysing cells. |

**Table 4**

| Consumables | |
|---|---|
| **Item** | **Description** |
| Tissue Molds | Metallic or clear plastic molds used as receptacle for the final stage during paraffin embedding. Mixed agarose cell mixture and liquid paraffin are placed in the mold and allowed to harden. Tissue mold is then removed and discarded. |
| Tissue Cassettes | Agarose cell mixtures after slicing are placed into designated tissue cassettes for fixing and embedding. |
| Tube Mold | A specified mold with a fixed diameter is used as a mold for which the agarose cell mixture is allowed to harden in refrigerated temperatures. Removal of the harden agarose cell mixture is by removing both ends of the mold. |
| Petri Dish | The sterile petri dish allows for a clean environment for which the harden agarose cell mixture is processed. |
| Sterile Forcep | Forceps are used to transfer fixed cell mixtures from the tissue cassettes to the tissue mold. |
| Razor Blade | Sterile razor blade used to remove ends from the agarose cell mixtures. |
| Sterile Disposable Scoops | Scoops used to transfer fragile agarose cell mixtures after slicing into the appropriate reagent filled container. |

**Table 5**

| Instruments | |
|---|---|
| **Item** | **Description** |
| Microwave | The microwave is used to melt the agarose. |
| Paraffin Embedder | Instrument that contains a reservoir of melted paraffin and cooling block. The instrument is used to dispense paraffin into the tissue mold. The instrument also cools the tissue molds containing the fixed cell mixture and paraffin. |
| Refrigerator | The refrigerator is used to cool the tube mold containing agarose and cell mixtures |
| Incubator/Shaker | The incubator and shaker is used to warm and mix the cell mixtures. The incubator can also be used to melt paraffin. |
| Slicing Apparatus | The slicing apparatus can be a modified egg slicer (base removed). The slicer divides the agarose cell mixture cylinder (after removal from the tube mold) into equivalent mini cylinders. |
| Microtome | Microtome is a calibrated instrument used to process FFPE blocks into sections. |

**Example 1**

### Quality Control FFPE method using KRAS marker G12C

This example demonstrates the feasibility of manufacturing qualitative formalin-fixed paraffin embedded (FFPE) KRAS Positive Control products using the method herein with red blood cells. The study demonstrates the ability to manufacture and value assign stock materials from sourced raw materials, the reproducibility of the product, detection of the product on target assays, as well as comparison of the products' DNA quality to those of the old FFPE method. The cell line having the KRAS G12C mutation (SW1463) was obtained from ATCC (Manassas, VA) and grown to a total of $1.0 \times 10^9$ cells. Stock materials are manufactured in Cell Freezing Media and were value- as signed against a calibrator (quantified by counting with a hemacytometer) using the Roche Light Cycler™ Control Beta-Globin test.

**A. Method I (using exemplary control cells)**

An incubator was set to 45°C. 1 % agarose was prepared and allowed to come to 45°C in the incubator. Human red blood cells (RBCs) were spun down in a microcentrifuge at maximum speed. The RBC's were washed with DMEM and the wash was repeated until the lysed cells were removed. The cells were spun down and 4g of RBC's were mixed with 6 mL of DMEM. An appropriate amount of cells containing the KRAS G12C mutation was measured gravimetrically into a sterile cup. The cells were mixed with wild-type cells (that do not contain the KRAS G12C mutation) with a mutant cell percentage of 10%. Two (2) mL of fixed cells containing the KRAS G12C (test cells plus wild-type cells) were mixed with 3 mL of a RBC mixture (0.4 g of RBC cells per mL of DMEM). The cellular mixture was warmed for 20 min. to 45°C. 0.5 mL of the agarose (at 45°C) was mixed with the cellular mixture (the fixed cells and RBCs) and poured into a tissue mold. The tissue mold was placed at -20°C for 7 minutes to quickly solidify the agarose/cellular mixture. The tissue mold was then placed in a refrigerator at 2-8 °C overnight. The next day, the cylinder was cut into minicylinders and processed following the FFPE manufacturing procedure (the 70% alcohol step was performed for 1 hr.) then embedded. The fixed mini-cylinders were transferred into labeled tissue cassettes. The tissue cassettes were transferred into a container filled with 70% alcohol and incubated for a minimum of 1 hour. The alcohol was decanted and excess removed using absorbent paper but the tissue cassettes were not allowed to dry completely. The tissue cassettes were then transferred into a container filled with 95% alcohol and incubated for 1 hour. The alcohol was decanted and excess removed using absorbent paper but the tissue cassettes were not allowed to dry completely. The tissue cassettes were then transferred into a container filled with 100% alcohol and incubated for 1 hour. The alcohol was decanted and the excess removed using absorbent paper but the tissue cassettes were not allowed to dry completely. The tissue cassettes were transferred into a container filled with Safeclear™ and incubated for 30 minutes. The Safeclear™ was decanted and excess removed using absorbent paper. The tissue cassettes were not allowed to dry completely. The tissue cassettes were transferred into a container filled with a 1 : 1 mixture of Safeclear™ and melted paraffin and incubated for 30 minutes at 65 °C. The 1 : 1 mixture of Safeclear™ and melted paraffin was decanted into a waste container. The tissue cassettes were transferred into container filled with melted paraffin and incubated for 1 hour at 65°C. The melted paraffin was decanted into a waste container. The tissue cassettes were then transferred into a container filled with melted paraffin and incubated for 2 hours at 65 °C. The fixed mini-cylinders were then transferred into a tissue mold containing melted paraffin. The base of the tissue cassette was placed over the tissue mold and paraffin was dispensed from the paraffin-embedding instrument until the mold and cassette were filled. The filled tissue mold was placed onto the refrigerated unit of the paraffin-embedder and allowed to harden for at least 1 hour. The FFPE blocks were sectioned on a Microtome into the appropriate thickness. The section was transferred using forceps into a sterile tube.

**B. Method II**

This method was carried out in an identical manner to method I except that the exemplary control cells (RBCs) were not added to the cells. The stocks used for in this prior method were also diluted prior to freezing.

**Example 2**

**Comparison Studies**

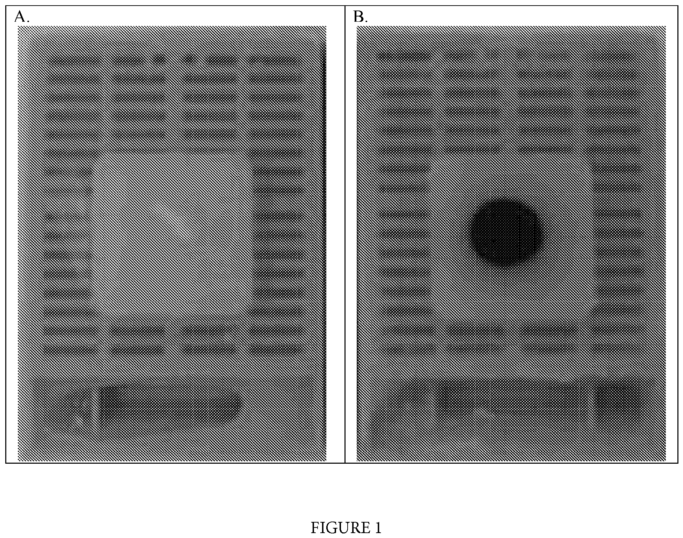

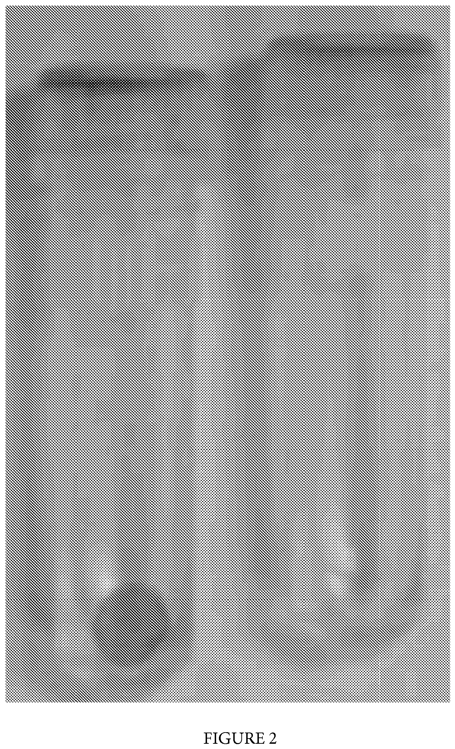

Four cylinders of KRAS G12C cells and 10% wild-type cells were manufactured using the method I of Example 1A. Ten to 15 blocks were manufactured from each cylinder. The method was found to improve the consistency and ease of handling the FFPE materials. The original cylindrical shape of the synthetic material was better retained. The shape was more consistent, which improved uniformity from section to section. Improving uniformity of the shape also increased the yield of the sections per block. These observations are illustrated in FIGS. 1 and 2 show that the sections with the red blood cells retained the cylindrical shape and were easier to see as compared to the sections that did not contain the red blood cells. In FIG. 1A, the block was manufactured without red blood cells, while the block on in FIG. 1B was manufactured at the same concentration using red blood cells. The block on the right retained the cylindrical shape, while the block on the left did not. FIG. 1B shows that during the process of FFPE (and/or DNA or RNA extraction), inclusion of the exemplary control cells (RBCs) made it easier to see the cell-containing portion of the block. FIG. 2 shows the section without red blood cells on the left and the section without red blood cells on the right during deparaffinization. SafeClear was added to the sections for deparaffinization. The section including the exemplary control cells (RBCs) were found to be easier to see, making the extraction process easier for users. Due to better visibility of the tissue, this also improved the ease of sectioning (e.g., for manufacturing of FFPE controls) as it was easier to see when one had sectioned through the paraffin and reached a full section of tissue. Furthermore, the ease of extraction was improved because it was easier to see the section of cells during deparaffinization.

Sections were cut from blocks, DNA was extracted therefrom, and the DNA amplified using the TaqMan Mutation Detection Assays (castPCR™ assays) for the KRAS G12C and wild-type alleles performed. The values obtained were substituted into the following formula:

$$Mutant\ \% = \frac{100\%}{1 + 2^{(\overline{CT}_{MT} - \overline{CT}_{WT} - f)}}$$

$$\overline{CT}_{MT} = Mean\ Mutant\ CT$$
$$\overline{CT}_{WT} = Mean\ Wild\ Type\ CT$$
$$f = Normalization\ factor$$

CT is an abbreviation for cycle threshold, which describes the cycle number in qPCR when the fluorescence crosses a defined threshold (see, e.g., U.S. Patent Nos. 6,303,305; 6,503,720; 6,783,934, 7,228,237 and U.S. Application No. 2004/0096819). In general, it is expected to see a lower CT value for a sample with higher starting concentration because it will take less PCR cycles for the sample to amplify and reach the defined threshold. By comparing the mutant CT value and wild- type CT value (with normalization), it is possible to compare the relative level of mutant vs. wild-type and calculate the mutant % of the sample. As shown in Table 6, the mutant percentage (see right most column) was very similar for both the new (Example 1A) and prior methods (Example IB).

**Table 6**

| Comparison of Methods | | | |
|---|---|---|---|
| Lot | Mean delta CT | Mean normalized CT | Fold Difference | G12C mutant percentage |
| L1 (Old Method) | 3.17 | 3.03 | 0.12 | 10.89 |
| L2 (Old Method) | 3.01 | 2.87 | 0.14 | 12.02 |

(continued)

| Comparison of Methods | | | | |
|---|---|---|---|---|
| Lot | Mean delta CT | Mean normalized CT | Fold Difference | G12C mutant percentage |
| L3 (Old Method) | 3.08 | 2.94 | 0.13 | 11.52 |
| L4 (Old Method) | 2.85* | 2.72* | 0.15* | 13.20* |
| RBC L1 (with RBC) | 3.49 | 3.35 | 0.10 | 8.93 |
| RBC L2 (with RBC) | 3.33 | 3.20 | 0.11 | 9.82 |
| RBC L3 (with RBC) | 3.23 | 3.09 | 0.12 | 10.49 |
| *Outlier removed | | | | |

Each column in Table 6 represents a step for calculating the mutant %. Thus, this data shows that the inclusion of an exemplary control cells (RBCs) did not affect the quality of the DNA in the sample as shown using PCR.

**Example 3**

***Kit for Analysis of KRAS FFPE assay quality control***

There are known mutations within the codon 12 and 13 of the KRAS gene that results in the loss of effectiveness of pharmaceutical therapies. Seven mutations (G12D, G12V, G12C, G12S, G12A, G12R, G13D) comprise 98.5% of known KRAS mutations that have an impact. Cell lines for these mutations are obtained and mixed in defined ratios with red blood cells. A cell line that is wildtype for KRAS can be included as a control.

A KRAS FFPE kit is prepared containing controls intended for use in assessing the performance of nucleic acid test procedures for the determination of KRAS mutations using the methods in Examples 1 and 2 (see Table 6; 1 vial per KRAS mutation and 1 wildtype (negative control)). Routine use of the KRAS FFPE controls enables laboratories to monitor day-to-day assay variation, lot-to-lot performance of assay reagents, and operator variation. The KRAS FFPE controls can also assist in identifying increases in random or systematic error in testing systems. The KRAS FFPE Controls kit contains controls for the seven major KRAS mutations and a wild type control. Each individual control consists of KRAS mutation-positive cells mixed with the RBC control cell that has been formalin-fixed and paraffin-embedded and sectioned to 10 microns thick. The KRAS FFPE Controls are designed to meet the need for controls for molecular testing of KRAS in FFPE samples. The independent set of external controls helps to ensure that KRAS nucleic acid testing procedures are consistent across manufacturers, testing laboratories, operators, platforms and assay formats. The KRAS FFPE Controls are formulated to mimic formalin fixed paraffin embedded tissues and designed to monitor all procedural steps in extracting human DNA from FFPE. The intact human cells allow for the verification of effective DNA extraction and purification. KRAS test methodology includes an extraction step that releases the DNA for amplification and detection, as appropriate to the test.

**Table 7**

| KRAS FFPE control kit | |
|---|---|
| Control name | Quantity |
| KRAS G12A | 1 section per vial >200 ng DNA |
| KRAS G12C | 1 section per vial >200 ng DNA |
| KRAS G12D | 1 section per vial >200 ng DNA |
| KRAS G12R | 1 section per vial >200 ng DNA |
| KRAS G12S | 1 section per vial >200 ng DNA |
| KRAS G12V | 1 section per vial >200 ng DNA |
| KRAS G13D | 1 section per vial >200 ng DNA |
| Wild Type | 1 section per vial >200 ng DNA |

**Example 4**

*Kit for Analysis of EGFR FFPE assay quality control*

An EGFR FFPE kit is prepared containing controls intended for use in assessing the performance of nucleic acid test procedures for the determination of EGFR mutations using the methods in Examples 1 and 2. Routine use of the EGFR FFPE controls enables laboratories to monitor day-to-day assay variation, lot-to-lot performance of assay reagents, and operator variation. The EGFR FFPE controls also assist in identifying increases in random or systematic error in testing systems. The EGFR FFPE Controls kit contains controls for 29 major EGFR mutations that are associated with drug resistance to chemotherapy drugs and a wild type sequence (see Table 7 for mutations). Each individual control consists of EGFR mutation-positive cells admixed with red blood cells and formalin-fixed and paraffin-embedded and sectioned to 10 microns thick. An EGFR wildtype cell control can be included also. The EGFR FFPE Control meets the need for controls for molecular testing of EGFR in FFPE samples. The kit contains 29 slices containing mixtures of EGFR mutations in a background of red blood cells and 1 slice containing an EGFR wildtype cell in a background of red blood cells. The independent set of external controls helps to ensure that EGFR nucleic acid testing procedures are consistent across manufacturers, testing laboratories, operators, platforms and assay formats. The EGFR FFPE Controls are formulated to mimic formalin fixed paraffin embedded tissues and are designed to monitor all procedural steps in extracting human DNA from FFPE. The intact human cells allow for the verification of effective DNA extraction and purification. EGFR test methodology includes an extraction step that releases the DNA for amplification and detection, as appropriate to the test.

**Table 8**
***Somatic EGF-R Mutations***

| Mutation | Exon | Base Change | Cosmic ID |
|---|---|---|---|
| T790M | 20 | 2369C>T | 6240 |
| L858R | 21 | 2573T>G | 6224 |
| L861Q | 21 | 2582T>A | 6213 |
| S768I | 20 | 2303G>T | 6241 |
| G719A | 18 | 2156G>C | 6239 |
| G719S | 18 | 2155G>A | 6252 |
| G719C | 18 | 2155G>T | 6253 |
| | | | |
| Insertions | 20 | 2307_2308ins9 | 12376 |
| 2319_2320msCAC | | 12377 | |
| 2310_2311msGGT | | 12378 | |
| | | | |
| Deletions | 19 | | |
| 2235_2249del15 | | 6223 | |
| 2235_2252>AAT (complex) | | 13551 | |
| 2236_2253del18 | | 12728 | |
| 2237_2251del15 | | 12678 | |
| 2237_2254del18 | | 12367 | |
| 2237_2255>T (complex) | | 12384 | |
| 2236_2250del15 | | 6225 | |
| 2238_2255del18 | | 6220 | |
| 2238_2248>GC (complex) | | 12422 | |
| 2238_2252>GCA (complex) | | 12419 | |
| 2239_2247del9 | | 6218 | |
| 2239_2253del15 | | 6254 | |
| 2239_2256del18 | | 6255 | |
| 2239_2248TTAAGAGAAG>C (complex) | | 12382 | |
| 2239_2258>CA (complex) | | 12387 | |
| 2240_2251del12 | | 6210 | |
| 2240_2257del18 | | 12370 | |

(continued)

### Somatic EGF-R Mutations

| Mutation | Exon | Base Change | Cosmic ID |
|---|---|---|---|
| 2240_2254del15 | | 12369 | |
| 2239_2251>C (complex) | | 12383 | |

(Note: the cosmic IDs are taken from the Catalogue of Somatic Mutations in Cancer web site s anger. ac . uk/genetic s/C GP/co smic/).

## Example 5

### *Manufacturing protocol for sectioning of FFPE blocks (comparative example)*

A procedure for manufacturing FFPE Blocks is described in this example. A sterile cup is filled to the 80ml line with 10% Neutral Buffered Formalin and swirled until all mini-cylinders (the slices) have separated. The mini-cylinders are placed in 10% Neutral Buffered Formalin for 2 hours at room temperature in the shaker set at 125 RPM, labeled and lidded. The 10% Neutral Buffered Formalin is decanted into the appropriate waste container and the mini-cylinders poured into a sterile Petri dish base. The tissue cassette is placed onto the sterile lid of the Petri dish and mini-cylinders transferred into tissue cassettes. A maximum of the same four mini-cylinders could be placed into one tissue cassette. The lid is closed and tissue cassettes placed into an appropriate container with 70% Alcohol. The volume of the 70% Alcohol reached above the tissue cassettes. A minimum fill at the 80ml line of the disposable sterile cup is required. It is incubated for a minimum of 1 hour with a maximum of 24 hours. For a hold time of 1 hour, it is incubated at room temperature. Any hold times that exceeded one hour would be incubated at 2-8°C. 70% Alcohol is decanted into a dedicated waste container. The Container is inverted and tissue cassettes are poured over an absorbent paper. The tissue cassettes are transferred into an appropriately- sized container with 95% Ethanol (ensure that the volume of the 95% Ethanol reaches above the tissue cassette). A minimum of approximately 80mL of 95% Ethanol is required. It is incubated for 55 to 65 minutes at room temperature. The Paraffin Embedder Instrument is turned on. An appropriate amount of paraffin is in each reservoir. The incubator/shaker is turned on and temperature set at 65°C. Clean sterile Polypropylene containers are filled with Paraffin until it reaches the top opening and placed in an incubator shaking at 125 RPM. 95% Alcohol was decanted into an appropriate waste container. The container with the tissue cassettes is inverted and tissue cassettes poured over an absorbent paper (without allowing the tissue cassettes to dry). The tissue cassettes are transferred into an appropriately sized container with 100% Ethanol (ensuring that the volume of the 100% Ethanol reaches above the tissue cassette) and incubated between 60 to 80 minutes at Room Temperature. A minimum of approximately 80mL of 100% Ethanol is required. The 100% Alcohol is decanted into an appropriate waste container. The container with the tissue cassettes is inverted and tissue cassettes poured over an absorbent paper (without allowing the tissue cassettes to dry). The tissue cassettes are transferred into an appropriately sized container with 100% Ethanol (ensuring that the volume of the 100% Ethanol reaches above the tissue cassette) and incubated between 30 to 40 minutes at Room Temperature. The 100% Alcohol is decanted into a sink with running water. The container with the tissue cassettes is inverted and tissue cassettes poured over an absorbent paper (without allowing the tissue cassettes to dry). The tissue cassettes are transferred into an appropriately sized container with SafeClear™ and the volume of the SafeClear™ made to reach above the tissue cassette and incubated between 30 to 40 minutes at room temperature. The SafeClear™ is decanted into a sink with running water. The container with the tissue cassettes is inverted and tissue cassettes poured over an absorbent paper (without allowing the tissue cassettes to dry). The tissue cassettes are placed into an appropriate container with SafeClear™, ensuring that the volume of the SafeClear™ reaches above the tissue cassette. The tissue cassettes are incubated between 30 to 40 minutes at room temperature. The incubator/shaker was set at 65 °C, ensuring that the shaker switch is in the OFF position. Equal volumes of melted paraffin were added with SafeClear and placed in a 65 °C + 1 °C incubator. The container with the tissue cassettes is inverted and tissue cassettes poured over an absorbent paper (without allowing the tissue cassettes to dry). The tissue cassettes are transferred into an appropriate container with 50:50 Paraffin/SafeClear™, ensuring that the volume of the 50:50 Paraffin/SafeClear™ reaches above the tissue cassette, and incubated between 30 to 40 minutes at 65 °C + 1 °C. (Ensuring the Shaker switch is in the OFF position). The 50:50 Paraffin/SafeClear™ was decanted into a disposable container. The tissue cassette was transferred into an appropriate container with Paraffin (ensuring that the volume of the Paraffin reaches above the tissue cassette), and incubated between 60 to 80 minutes at 65 °C + 1 °C. The Shaker switch is in the OFF position. The Paraffin was decanted into a disposable container. The tissue cassette was transferred into an appropriate container with Paraffin (Ensure that the volume of the Paraffin reaches above the tissue cassette), and incubated between 60 to 80 minutes at 65 °C + 1 °C (Ensure Shaker switch is in the OFF position). The Paraffin is decanted into a disposable container. The tissue cassette is transferred into an appropriate container with sample reservoir of the Paraffin Embedder (ensuring that the volume of the Paraffin reaches above the tissue cassettes) and incubated between 120 to 140 minutes.

Paraffin embedding is performed as described herein. After incubation, the first tissue cassette is removed and placed on a paraffin embedder. Tissue molds are placed into the warmed tissue mold holder. Mini-cylinders are inspected to ensure that they are intact and have significantly shrunk in size. The tissue mold is removed from the tissue mold warmer and paraffin dispensed from a nozzle to fill the bottom of the well. The tissue mold containing paraffin is placed over the cold portion of the paraffin embedder. In a timely manner, a mini-cylinder is placed onto the center of the tissue mold and allowed to cool partially, but not until solid. The tissue cassette is placed without the lid over the tissue mold with the flat surface facing the tissue. The tissue cassette is placed downward (ensure that no air bubbles are trapped within the sample). If air bubbles are present, the tissue cassette is lifted and placed back down until all the air bubbles are removed (ensure that the mini-cylinder is still within the center of the tissue mold). Paraffin is dispensed from the nozzle until the entire bottom of the tissue cassette is covered. Material is carefully transferred and placed on the cold side of the paraffin embedder. This is repeated until all of the mini-cylinders are embedded in paraffin. The embedded cylinders are allowed to cool for a minimum of 30 minutes up to a maximum of 24 hours on the cold side of the embedder. If the material is going to be filled within the next 24 hours, the bulk material is stored at 2-8°C until filled. If the material is not going to be filled within the next 24 hours, the bulk material is stored at the appropriate storage temperature.

### Example 6

#### *Additional Comparison Studies*

These procedures may also be used to assay markers of unknown significance or known, but experimental (e.g., not diagnostic), significance (e.g., for basic research purposes). For example, cells expressing any marker of interest may be used in place of and / or in addition to luciferase-expressing cells and assayed as desired. Multiple (e.g., four) cylinders containing cells where about 90% of such cells are engineered to express luciferase and about 10% are "wild-type" cells (e.g., do not express luciferase) are manufactured using the methods of Examples 1 A and 2 using the exemplary control cells RBCs. Multiple (e.g., 10-15) blocks are manufactured from each cylinder. Sections are cut from blocks, DNA extracted, and the DNA amplified using the TaqMan Mutation Detection Assays (castPCR™ assays) for the luciferase and wild-type sequences. The luciferase percentage is then calculated using the procedure described in Example 2. This system is useful for basic research purposes as cells expressing any sequence of interest may be used in place of the luciferase-expressing cells.

### Claims

1. A method for preparing a formalin-fixed, paraffin-embedded sample, the method comprising combining test cells with control cells not comprising a nucleus and having a physical differentiating feature from the test cells such as color to provide a test mixture; and preparing a formalin-fixed, paraffin-embedded sample comprising the mixture.

2. The method of claim 1, wherein the control cells improve the visibility and / or uniformity of the test cells in the sample as compared to a sample prepared in the absence of the control cells.

3. The method of claim 1 or 2, wherein the control cells are substantially the same size as the test cells.

4. The method of any previous claim, wherein the color is provided by a detectable label, optionally wherein the detectable label is fixably attached to the control cells.

5. The method of any previous claim, wherein the control cells do not comprise RNA, optionally wherein the RNA is microRNA (miRNA) or messenger RNA (mRNA).

6. The method of any previous claim, wherein the test cells comprise a genetic marker not detectable and / or not present in the control cells.

7. The method of any previous claim, wherein the control cells comprise red blood cells.

8. The method of any one of claims 1-7, wherein the test mixture comprises test cells, control cells and red blood cells.

9. The method of any previous claim, further comprising detecting the marker on the test cells.

10. The method of claim 9, wherein the detecting step is carried out using a nucleic acid amplification and detection assay system.

11. A formalin-fixed, paraffin-embedded sample prepared by a method of any one of claims 1-8.

12. A kit comprising a sample of claim 11.


**Patentansprüche**

1. Verfahren zum Herstellen einer Formalin-fixierten, Paraffin-eingebetteten Probe, das Verfahren umfassend Kombinieren von Testzellen mit Kontrollzellen, nicht umfassend einen Zellkern und mit einem physischen Unterscheidungsmerkmal von den Testzellen, wie beispielsweise Farbe, um eine Testmischung bereitzustellen; und Herstellen einer Formalin-fixierten, Paraffin-eingebetteten Probe, umfassend die Mischung.

2. Verfahren nach Anspruch 1, wobei die Kontrollzellen die Sichtbarkeit und/oder Gleichmäßigkeit der Testzellen in der Probe, verglichen mit einer Probe hergestellt in der Abwesenheit der Kontrollzellen, verbessern.

3. Verfahren nach Anspruch 1 oder 2, wobei die Kontrollzellen im Wesentlichen die gleiche Größe wie die Testzellen haben.

4. Verfahren nach einem vorhergehenden Anspruch, wobei die Farbe durch eine nachweisbare Markierung bereitgestellt wird, wobei optional die nachweisbare Markierung fixierbar an den Kontrollzellen angebracht wird.

5. Verfahren nach einem vorhergehenden Anspruch, wobei die Kontrollzellen keine RNA umfassen, wobei optional die RNA microRNA (miRNA) oder Boten-RNA (mRNA) ist.

6. Verfahren nach einem vorhergehenden Anspruch, wobei die Testzellen einen genetischen Marker umfassen, der nicht nachweisbar und/oder in den Kontrollzellen nicht vorhanden ist.

7. Verfahren nach einem vorhergehenden Anspruch, wobei die Kontrollzellen rote Blutkörperchen umfassen.

8. Verfahren nach einem der Ansprüche 1-7, wobei die Testmischung Testzellen, Kontrollzellen und rote Blutkörperchen umfasst.

9. Verfahren nach einem vorhergehenden Anspruch, ferner umfassend Nachweisen des Markers auf den Testzellen.

10. Verfahren nach Anspruch 9, wobei der Nachweisschritt unter Verwendung einer Nukleinsäureamplifikation und eines Nachweisuntersuchungssystems durchgeführt wird.

11. Formalin-fixierte, Paraffin-eingebettete Probe, hergestellt durch ein Verfahren nach einem der Ansprüche 1-8.

12. Kit, umfassend eine Probe nach Anspruch 11.


**Revendications**

1. Procédé de préparation d'un échantillon fixé au formol et intégré dans la paraffine, le procédé comprenant à combiner des cellules de test avec des cellules de contrôle ne comprenant pas de noyau et présentant une caractéristique de différenciation physique par rapport aux cellules de test, telle qu'une couleur, pour obtenir un mélange de test ; et préparer un échantillon fixé au formol et intégré dans la paraffine comprenant le mélange.

2. Procédé selon la revendication 1, dans lequel les cellules de contrôle améliorent la visibilité et / ou l'uniformité des cellules de test dans l'échantillon par rapport à un échantillon préparé sans cellules de contrôle.

3. Procédé selon la revendication 1 ou 2, dans lequel les cellules de contrôle ont sensiblement la même taille que les cellules de test.

**4.** Procédé selon l'une quelconque des revendications précédentes, dans lequel la couleur est fournie par une étiquette détectable, dans lequel éventuellement l'étiquette détectable est attachée fixement aux cellules de contrôle.

**5.** Procédé selon l'une quelconque des revendications précédentes, dans lequel les cellules de contrôle ne comprennent pas d'ARN, dans lequel éventuellement l'ARN est un microARN (miARN) ou un ARN messager (ARNm).

**6.** Procédé selon l'une quelconque des revendications précédentes, dans lequel les cellules de test comprennent un marqueur génétique non détectable et / ou non présent dans les cellules de contrôle.

**7.** Procédé selon l'une quelconque des revendications précédentes, dans lequel les cellules de contrôle comprennent des globules rouges.

**8.** Procédé selon l'une quelconque des revendications 1 à 7, dans lequel le mélange de test comprend des cellules de test, des cellules de contrôle et des globules rouges.

**9.** Procédé selon l'une quelconque des revendications précédentes, comprenant en outre la détection du marqueur sur les cellules de test.

**10.** Procédé selon la revendication 9, dans lequel l'étape de détection est effectuée en utilisant un système d'analyse d'amplification et de détection d'acide nucléique.

**11.** Echantillon fixé au formol et intégré dans la paraffine préparé par un procédé selon l'une quelconque des revendications 1 à 8.

**12.** Kit comprenant un échantillon selon la revendication 11.

FIGURE 1

FIGURE 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012022557 A
- US 20100221717 A1
- US 12641321 B
- US 20100285478 A1
- US 12748329 B
- US 6303305 B
- US 6503720 B
- US 6783934 B
- US 7228237 B
- US 20040096819 A

**Non-patent literature cited in the description**

- **WIGLE et al.** *Cancer Research,* 2002, vol. 62 (11), 3005-3008
- **BEER et al.** *Nature,* 2002, vol. 8 (8), 816-824
- **JOHNSTON et al.** *J. Clinical Oncology,* 2002, vol. 20 (7), 1721-1728